# EUROPÄISCHE PATENTSCHRIFT

(11) **EP 3 034 379 B1**
(45) Veröffentlichungstag und Bekanntmachung des Hinweises auf die Patenterteilung: **30.05.2018**
(21) Anmeldenummer: 15003468.4
(22) Anmeldetag: 05.12.2015
(51) Int. Cl.: B62D 1/181, B60W 50/16, B62D 15/02, B60W 40/02, G01C 21/36

(54) **VORRICHTUNG UND VERFAHREN ZUR HAPTISCHEN NAVIGATIONSUNTERSTÜTZUNG EINES FAHRERS EINES FAHRZEUGS**
DEVICE AND METHOD FOR HAPTIC NAVIGATION SUPPORT FOR THE DRIVER OF A VEHICLE
DISPOSITIF ET PROCÉDÉ D'ASSISTANCE HAPTIQUE À LA NAVIGATION D'UN CONDUCTEUR D'UN VÉHICULE AUTOMOBILE

(30) Priorität: 19.12.2014 DE 102014019130
(43) Veröffentlichungstag der Anmeldung: 22.06.2016
(73) Patentinhaber: AUDI AG, 85045 Ingolstadt (DE)
(72) Erfinder: Mulinski, Stefan, DE - 85134 Stammham (DE)
(74) Vertreter: Thielmann, Frank

(56) Entgegenhaltungen:
- WO-A1-2009/143903
- DE-A1- 10 343 683
- DE-A1-102007 029 427
- DE-A1-102009 033 058
- DE-A1-102011 100 586
- US-A1- 2014 172 226

## Beschreibung

Die vorliegende Erfindung betrifft eine Vorrichtung zur haptischen Navigationsunterstützung eines Fahrers eines Fahrzeugs, mit einer Steuereinheit sowie einem mit der Steuereinheit gekoppelten Aktuator, wobei die Steuereinheit (12) eingerichtet ist, den Aktuator (14) zu steuern, wobei der Aktuator mit einer Lenksäule des Fahrzeugs mechanisch gekoppelt ist, und die Steuereinheit eingerichtet ist, mittels einer Aktivierung des Aktuators eine durch den Fahrer haptisch sensierbare Auslenkung eines Lenkrades der Lenksäule zu erzeugen, um den Fahrer auf eine vorzunehmende Lenkbewegung hinzuweisen. Ferner betrifft die Erfindung ein Fahrzeug mit einer solchen Vorrichtung. Schließlich betrifft die Erfindung auch ein Verfahren zur haptischen Navigationsunterstützung eines Fahrers eines Fahrzeugs, mit folgenden Schritten: Vorsehen einer Vorrichtung mit einer Steuereinheit sowie einem mit der Steuereinheit gekoppelten Aktuator, Steuern des Aktuators mittels der Steuereinheit, mechanisches Koppeln des Aktuators mit einer Lenksäule des Fahrzeugs, Erzeugen einer durch den Fahrer haptisch sensierbaren Auslenkung eines Lenkrades der Lenksäule, um den Fahrer auf eine vorzunehmende Lenkbewegung hinzuweisen.

Eine gattungsgemäße Vorrichtung, ein Fahrzeug mit einer solchen Vorrichtung sowie ein entsprechendes Verfahren sind aus der DE 10 2011 100 586 A1 bekannt. Bei der hier vorgesehenen Vorrichtung ist vorgesehen, dass mittels des Aktuators ein Kippen des Lenkrades in eine Richtung erfolgt, in die das Fahrzeug gelenkt werden soll. Dabei erweist sich das Kippen des Lenkrades dem Grunde nach als nachteilig, weil dadurch der Fahrer fälschlicherweise instinktiv auf einen Fehler der Lenkvorrichtung insgesamt schließt. Insbesondere, wenn der Fahrer erstmalig ein derartiges Fahrzeug steuert und ein entsprechendes Kippen sensiert, beziehugnsweise haptisch erfasst, kann es zu Schrecksekunden kommen, in denen der Fahrer nicht oder nur verzögert auf Anforderungen während des Fahrbetriebs des Fahrzeugs reagiert. Darüber hinaus können Fehlhandlungen des Fahrers ausgelöst werden, die als Schutzreaktion instinktiv vom Fahrer vorgenommen werden Dadurch können zusätzliche gefährliche Situationen entstehen. Das Dokument DE102009033058 A1 ist als nächstliegender Stand der Technik nach dem Oberbegriff des Anspruchs 1 zu sehen. Die Erfindung befasst sich mit der Aufgabe, die haptische Navigationsunterstützung des Fahrers des Fahrzeugs zu verbessern.

Als Lösung schlägt die Erfindung bei einer gattungsgemäßen Vorrichtung vor, dass der Aktuator eingerichtet ist, eine horizontale Ausrichtung des Lenkrades in eine durch die vorzunehmende Lenkbewegung vorgegebene Richtung zu erzeugen.

Fahrzeugseitig wird vorgeschlagen, dass das Fahrzeug eine Vorrichtung gemäß der Erfindung aufweist.

Verfahrensseitig wird entsprechend vorgeschlagen, dass bei einem gattungsgemäßen Verfahren eine horizontale Auslenkung des Lenkrades in eine durch die vorzunehmende Lenkbewegung vorgegebene Richtung erzeugt wird.

Die Erfindung vermeidet es, dass eingangs angegebene Verkippen anzuwenden und dadurch den Fahrer zu verunsichern. Die Erfindung vermeidet es gänzlich, das Lenkrad hinsichtlich seiner ebenen Ausrichtung zu verändern. Dadurch kann eine ergonomisch günstigere und sicherere Weisung des Fahrers erreicht werden. Die Vorrichtung kann vorteilhaft mit einem Navigationsgerät des Fahrzeugs als Steuereinheit verbunden sein. Darüber hinaus kann es natürlich auch in das Navigationsgerät integriert sein oder das Navigationsgerät kann in die Vorrichtung integriert sein. Dadurch, dass lediglich eine horizontale Auslenkung des Lenkrades genutzt wird, erscheint dies dem Fahrer viel eher als eine haptische Rückwirkung als ein Verkippen. Dadurch nimmt der Fahrer die Auslenkung unmittelbar als haptische Navigationsunterstützung wahr.

Der Aktuator kann beispielsweise durch ein elektrisch, magnetisch, hydraulisch und/oder pneumatisch antreibbares Element gebildet sein, welches mit der Lenksäule verbunden ist. Dabei nutzt die Erfindung zum Beispiel ein Spiel der Lenksäule, sodass eine Auslenkung in der gewünschten horizontalen Richtung möglich ist, ohne an der Lenksäule mechanische Veränderungen hinsichtlich der Lagerung vornehmen zu müssen.

Der Aktuator kann beispielsweise auch durch eine Funktionseinheit gebildet sein, die im Bereich der lenkradseitigen Lagerungseinheit der Lenksäule angeordnet ist, indem sie die Lagerungseinheit der Lenksäule aufnimmt. Dadurch kann ein entsprechende Auslenkung unabhängig von vorhandenem Spiel der Lagerungseinheit realisiert werden.

Die Erfindung ermöglicht es dadurch, den Fahrer auch dann hinsichtlich der Navigation unterstützen zu können, wenn er aufgrund der ihn umgebenden Bedingungen Weisungen des Navigationsgerätes des Fahrzeugs weder akustisch noch optisch folgen kann. Die Erfindung ermöglicht es darüber hinaus, eine Navigationsunterstützung allein aufgrund einer haptischen Rückwirkung bereitzustellen, sodass ergänzende Kommunikationsmittel, zum Beispiel zur akustischen und/oder optischen Übermittlung von Navigationsweisungen, eingespart werden können. Die Erfindung erweist sich auch dann als nützlich, wenn bereits ein Navigationsgerät im Fahrzeug installiert ist, jedoch seine akustische und/oder optische Wiedergabemöglichkeit eingeschränkt oder ausgefallen ist.

Die Lenksäule des Fahrzeugs dient dazu, eine vom Fahrer manuell aufgebrachte Lenkbewegung auf lenkbare Räder des Fahrzeugs zu übertragen, sodass das Fahrzeug in die gewünschte Fahrtrichtung gelenkt wird. Die Lenksäule ist ferner vorzugsweise eingerichtet, ein Lenkmoment des Fahrers möglichst Geräusch- und Reibungsarm zu übertragen. Insbesondere ist die Lenksäule für eine hohe Verdrehsteifigkeit ausgelegt, um dem Fahrer ein ergonomisch günstiges Lenkgefühl vermitteln zu können. Die Lenksäule kann darüber hinaus Komfortfunktionen umfassen. Eine solche Komfortfunktion kann eine elektrische Verstellbarkeit der Lenksäule sein, beispielsweise mittels einer geregelten Verstellung, einer akustikoptimierten Verstellung, einer Easy-Entry-Verstellung, einer Memoryfunktion und/oder dergleichen. Bei einer manuell verstellbaren Lenksäule kann eine ergonomische, geräuscharme Längs- und Höhenverstellung vorgesehen sein.'

Vorzugsweise umfasst die Lenksäule auch eine Dichtstulpe. Damit kann eine akustische Entkopplung des Motorraums des Kraftfahrzeugs von einem Innenraum des Kraftfahrzeugs erreicht werden.

Schließlich kann die Lenksäule auch eine Sicherheitsfunktion umfassen, insbesondere in Bezug auf ein Crashverhalten bei einem Unfall. Diese Sicherheitsfunktion kann kraftfahrzeugspezifisch und/oder länderspezifisch ausgebildet sein.

Die Lenksäule ist vorzugsweise derart ausgebildet, dass sie ohne signifikante konstruktive Eingriffe in einer Mehrzahl von Kraftfahrzeugen unterschiedlichen Typs eingesetzt werden kann.

Die Auslenkung des Lenkrades erfolgt vorzugsweise jeweils lediglich in eine Richtung, und zwar in die Richtung, in die das Fahrzeug gelenkt werden soll. Insbesondere erfolgt die Aktivierung des Aktuators rechtzeitig vor einem Erfordernis der Durchführung der Lenkbewegung, sodass der Fahrer hinreihend Zeit hat, sich auf den bevorstehenden Lenkeingriff vorzubereiten und den umgebenden Verkehr zu berücksichtigen. Insofern kann die Auslenkung des Lenkrads einige Sekunden vor der vorzunehmenden Lenkbewegung erfolgen. Dabei kann der zeitliche Vorlauf der Auslenkung gegenüber der vorzunehmenden Lenkbewegung beispielsweise geschwindigkeitsabhängig sein, sodass bei einer hohen Geschwindigkeit die Auslenkung zeitlich früher erfolgt als bei einer niedrigen Geschwindigkeit.

Gemäß einer vorteilhaften Weiterbildung wird vorgeschlagen, dass der Aktuator im Bereich einer lenkradseitigen Lagerungseinheit der Lenksäule angeordnet ist. Dadurch kann der Aktuator auf einfache Weise in bestehende Konstruktionen integriert werden. Diese Ausgestaltung erlaubt es darüber hinaus, die Erfindung bei bestehenden Fahrzeugen auf einfache Weise nachzurüsten, weil nur geringfügige Änderungen zur Montage des Aktuators an der Lenksäule erforderlich sind.

Besonders vorteilhaft ist der Aktuator drehfest gegenüber der Lenksäule angeordnet. Dadurch kann sichergestellt werden, dass - unabhängig von einer jeweiligen Lenkradstellung - die Auslenkung immer horizontal erfolgt. Die horizontale Ausrichtung hat darüber hinaus den Vorteil, dass sie den Lenkrichtungen rechts und links intuitiv einfach zugeordnet werden kann, sodass eine ergonomisch günstige Navigationshilfe erreicht werden kann. Zu diesem Zweck kann die Auslenkung geeignet ausgebildet sein, insbesondere hinsichtlich ihres zeitlichen Verlaufs, sodass haptisch eine entsprechende Navigationsunterstützung erfassbar ist.

Gemäß einer Weiterbildung der Erfindung wird vorgeschlagen, dass die Auslenkung durch einen, insbesondere einzelnen, Impuls oder durch eine vorgegebene Anzahl von Impulsen gebildet wird. Die Impulse können zumindest teilweise auch zeitlich überlappend vorgesehen sein. Dadurch kann eine ergonomisch besonders günstig sensierbare Auslenkung bereitgestellt werden. Insbesondere kann mit der Erfindung erreicht werden, dass das haptische Sensieren der Auslenkung auch bei ungünstigen Eigenschaften, beispielsweise Fahren über einem Kopfsteinpflaster oder dergleichen zuverlässig gewährleistet werden kann.

Gemäß einer Weiterbildung wird vorgeschlagen, dass eine Amplitude der Auslenkung eingestellt wird. Die Amplitude kann beispielsweise in Abhängigkeit von Umgebungsbedingungen eingestellt werden. So kann vorgesehen sein, dass die Amplitude in Abhängigkeit von Umgebungsgeräuschen eingestellt wird, beispielsweise indem mit zunehmendem Umgebungsgeräusch die Amplitude ebenfalls zunimmt. Zu diesem Zweck kann der Geräuschpegel mittels eines akustischen Sensor erfasst werden. Dies erweist sich beispielsweise dann als vorteilhaft, wenn der Fahrer oder auch mitfahrende Personen sich unterhalten und der Fahrer durch die Unterhaltung möglicherweise abgelenkt ist. Durch eine geeignet stark ausgewählte Auslenkung beziehungsweise eine geeignet gewählte Amplitude der Auslenkung kann die Aufmerksamkeit des Fahrers wieder zurückgewonnen werden.

Gemäß einer Weiterbildung wird vorgeschlagen, dass im Bereich des Fahrers während des bestimmungsgemäßen Betriebs des Fahrzeugs eine Vibration ermittelt wird und die Amplitude in Abhängigkeit von der ermittelten Vibration eingestellt wird. Dadurch kann die Amplitude derart gewählt werden, dass sie auch bei ungünstigen Randbedingungen hinsichtlich der haptischen Sensierung zuverlässig vom Fahrer erfasst werden kann.

Besonders vorteilhaft erweist es sich, wenn ein zeitlicher Verlauf der Auslenkung in Abhängigkeit von der ermittelten Vibration eingestellt wird. Diese Ausgestaltung erlaubt es, die Vibration bei der Festlegung der Auslenkung, insbesondere einer Kurvenform in Bezug auf den zeitlichen Verlauf einzustellen. So kann vorgesehen sein, dass der zeitliche Verlauf der Auslenkung hinreichend abweichend von einem ermittelten zeitlichen Verlauf der ermittelten Vibration eingestellt wird, um die haptische Erfassbarkeit der Auslenkung bei vorliegender Vibration zu verbessern. Durch geeignete Wahl des zeitlichen Verlaufs der Auslenkung kann erreicht werden, dass die Auslenkung auch dann noch zuverlässig sensiert werden kann, wenn sie von der ermittelten Vibration in Bezug auf eine Amplitude überdeckt wird. Besonders vorteilhaft erweist es sich, wenn eine Korrelation zwischen dem zeitlichen Verlauf der Auslenkung und dem zeitlichen Verlauf der ermittelten Vibration möglichst gering ist. Zu diesem Zweck kann eine Anzahl vorgespeicherter zeitlicher Verläufe für Auslenkungen mit dem zeitlichen Verlauf der ermittelten Vibration verglichen werden. In Abhängigkeit eines Korrelationsvergleichs wird dann vorzugsweise der zeitliche Verlauf der vorgespeicherten zeitlichen Verläufe ausgewählt, bei dem eine Korrelation möglichst gering ist.

Besonders vorteilhaft kann auch ein Geräuschpegel im Bereich des Fahrers ermittelt werden und die Amplitude der Auslenkung wird in Abhängigkeit von dem ermittelten Geräuschpegel eingestellt. Beispielsweise kann hier eine akustische Wiedergabe erfasst werden, insbesondere in Bezug auf eine Lautstärke und in Abhängigkeit der Lautstärke die Amplitude der Auslenkung eingestellt werden. Zu diesem Zweck kann zum Beispiel vorgesehen sein, dass eine Einstellung eines Lautstärkereglers eines Autoradios erfasst wird und zur Einstellung der Amplitude dient.

Darüber hinaus wird vorgeschlagen, dass die Amplitude der Auslenkung begrenzt wird. Hierdurch kann erreicht werden, dass die Wirkung der Erfindung auf die haptische Rückmeldung beschränkt wird, und zwar unabhängig davon, gemäß welcher Funktion die Amplitude der Auslenkung eingestellt wird. Die Begrenzung hat darüber hinaus den Vorteil, dass eine maximal mögliche Amplitude der Auslenkung derart begrenzt wird, dass ein Fahrer, der mit der haptischen Rückwirkung noch nicht vertraut ist, dies nicht irrtümlich als Fehler der Lenkung insgesamt versteht und möglicherweise falsch reagiert. Die Ergonomie kann hierdurch weiter verbessert werden.

Natürlich ist es auch möglich, dass die Begrenzung der Amplitude der Auslenkung einstellbar gewählt werden kann. So ist es beispielsweise möglich, dass die Begrenzung der Amplitude der Auslenkung während eines kontinuierlichen Fahrbetriebs leicht ansteigt, um zu berücksichtigen, dass der Fahrer sich möglicherweise mit zunehmender Fahrtdauer einerseits an die haptische Rückwirkung gewöhnt und andererseits unempfindlicher auf die haptische Rückwirkung reagiert. Dadurch kann insgesamt die ergonomische Rückwirkung für den Fahrer weiter verbessert werden.

Weitere Vorteile und Merkmale sind der folgenden Beschreibung eines Ausführungsbeispiels anhand einer Figur zu entnehmen. Das Ausführungsbeispiel dient lediglich der Erläuterung der Erfindung und ist für diese nicht beschränkend.

Es zeigen:
- Fig. 1: in einer schematisch perspektivischen Ansicht eine Lenksäule eines nicht weiter dargestellten Fahrzeugs mit einer Assistenzvorrichtung gemäß der Erfindung und
- Fig. 2: in einer schematisch perspektivischen Blockdarstellung die As sistenzvorrichtung gemäß der Erfindung.

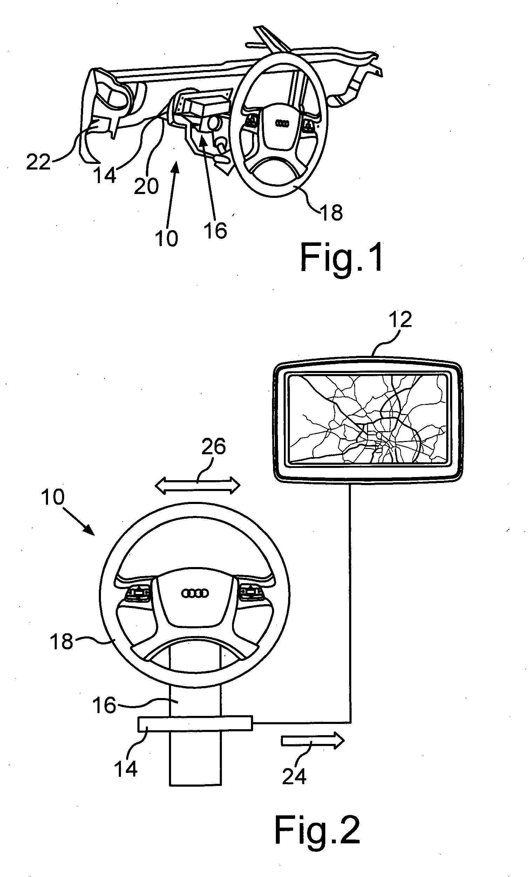

Fig. 1 zeigt in einer perspektivisch schematischen Darstellung einen Modulträger 22 eines Kraftfahrzeugs im Bereich einer Fahrerposition, an welchem eine Lagerungseinheit 20 zum Lagern einer Lenksäule 16 angeordnet ist. Die Lenksäule 16 ist drehbar in der Lagerungseinheit 20 gelagert und weist endseitig ein Lenkrad 18 auf, mittels dem ein Fahrer Lenkbewegungen zum Steuern des Fahrzeugs beziehungsweise zum Lenken des Fahrzeugs ausführen kann. Die Lagerungseinheit 20 ist vorliegend von einem Aktuator 14 gehalten, der seinerseits am Modulquerträger 22 befestigt ist. Der Aktuator 14 ist vorliegend als elektrisch betätigbarer Aktuator ausgebildet und erlaubt es, bei seiner Aktivierung die Lenksäule 16 und das mit ihr verbundene Lenkrad 18 in eine vorgegebene horizontale Richtung auszulenken. Die Art der Auslenkung ist durch entsprechende Ansteuerung des Aktuators 14 einstellbar.

Fig. 2 zeigt in einer schematischen Blockdarstellung die Lenksäule 16, an der endseitig das Lenkrad 18 drehfest befestigt ist. Ein Verdrehen des Lenkrades 18 führt somit zu einem Verdrehen der Lenksäule 16. Ferner ist dargestellt, dass ein Aktuator 14 die Lenksäule 16 hält. Aus Fig. 2 ist nicht ersichtlich, dass der Aktuator 14 zugleich auch die Lagerungseinheit 20 umfasst. Eine Betätigung des Aktuators 14 führt somit zu einer horizontalen Bewegung der Lenksäule 16 und infolgedessen des Lenkrades 18.

Der Aktuator 14 ist ferner über eine nicht bezeichnete Leitung an ein Navigationsgerät 12 angeschlossen, welches vorliegend die Steuereinheit für den Aktuator 14 bildet. Das Navigationsgerät 12 steuert den Aktuator 14 in vorgegebener Weise an, sodass entsprechende Auslenkungen am Lenkrad 18 vom Fahrer als haptische Rückmeldung beziehungsweise Navigationsunterstützung sensierbar sind. Die möglichen Auslenkungen des Lenkrades 18 sind mit einem Pfeil 26 dargestellt.

Wird während des Fahrbetriebes durch das Navigationsgerät 12 ein Abbiegen in einer Entfernung von 100 Metern ermittelt, so gibt das Navigationsgerät 12 einen entsprechenden elektrischen Impuls zur Auslenkung des Lenkrades an den Aktuator 14. Ist im vorliegenden Fall vorgesehen, dass rechts abgebogen werden soll, so erfolgt eine Auslenkung zum jetzigen Zeitpunkt, das heißt, rechtzeitig vor dem Erfordernis des Abbiegens, durch Aktivierung des Aktuators 14 derart, dass eine Auslenkung gemäß dem Pfeil 24 erfolgt. Dadurch erhält der Fahrer eine haptisch sensierbare Navigationsunterstützung, indem das Lenkrad 18 einen einzelnen kurzen Impuls nach rechts aufgibt. Sollte der Fahrer akustische Navigationsanweisungen des Navigationsgerätes 12 überhört haben und aufgrund des Verkehrs eine optische Navigationsunterstützung nicht nutzen können, so kann mit der haptischen Rückwirkung der Auslenkung gemäß Pfeil 24 eine entsprechende Navigationsunterstützung bereitgestellt werden, sodass der Fahrer in vorgebbarer Weise den Abbiegevorgang einleiten und durchführen kann.

Das Ausführungsbeispiel dient lediglich der Erläuterung der Erfindung und ist für diese nicht beschränkend. Natürlich können Funktionen, insbesondere auch bezüglich der mechanischen Kopplung zwischen dem Aktuator und der Lenksäule beliebig ausgestaltet sein, ohne den Gedanken der Erfindung zu verlassen. Darüber hinaus ist die Erfindung natürlich nicht nur auf die Anwendung bei Kraftfahrzeugen beschränkt, sondern sie kann ebenso bei nicht mit einem Antrieb vorgesehenen Fahrzeugen oder bei Wasserfahrzeugen vorgesehen sein.

Schließlich ist anzumerken, dass die für die erfindungsgemäße Vorrichtung beschriebenen Vorteile und Merkmale sowie Ausführungsformen gleichermaßen für das entsprechende Verfahren gelten und umgekehrt. Folglich können für Vorrichtungsmerkmale entsprechende Verfahrensmerkmale und umgekehrt vorgesehen sein.

## Patentansprüche

1. Vorrichtung (10) zur haptischen Navigationsunterstützung eines Fahrers eines Fahrzeugs, mit einer Steuereinheit (12) sowie einem mit der Steuereinheit (12) gekoppelten Aktuator (14), wobei die Steuereinheit (12) eingerichtet ist, den Aktuator (14) zu steuern, wobei der Aktuator (14) mit einer Lenksäule (16) des Fahrzeugs mechanisch gekoppelt ist, und die Steuereinheit (12) eingerichtet ist, mittels einer Aktivierung des Aktuators (14) eine durch den Fahrer haptisch sensierbare Auslenkung eines Lenkrades (18) der Lenksäule (16) zu erzeugen, um den Fahrer auf eine vorzunehmende Lenkbewegung hinzuweisen, wobei der Aktuator (14) eingerichtet ist, eine horizontale Auslenkung des Lenkrades (18) in eine durch die vorzunehmende Lenkbewegung vorgegebene Richtung zu erzeugen,
**dadurch gekennzeichnet, dass**
die Steuereinheit (12) eingerichtet ist, eine Amplitude der Auslenkung einzustellen, im Bereich des Fahrers während des bestimmungsgemäßen Betriebs des Fahrzeugs eine Vibration zu ermitteln und die Amplitude in Abhängigkeit von der ermittelten Vibration einzustellen.

2. Vorrichtung nach Anspruch 1, **dadurch gekennzeichnet, dass** der Aktuator im Bereich einer lenkradseitigen Lagerungseinheit (20) der Lenksäule (16) angeordnet ist.

3. Fahrzeug **gekennzeichnet durch** eine Vorrichtung nach einem der vorhergehenden Ansprüche.

4. Verfahren zur haptischen Navigationsunterstützung eines Fahrers eines Fahrzeugs, mit folgenden Schritten:
- Vorsehen einer Vorrichtung (10) mit einer Steuereinheit (12) sowie einem mit der Steuereinheit (12) gekoppelten Aktuator (14),
- Steuern des Aktuators (14) mittels der Steuereinheit (12),
- mechanisches Koppeln des Aktuators (14) mit einer Lenksäule (16) des Fahrzeugs,
- Erzeugen einer durch den Fahrer haptisch sensierbaren Auslenkung eines Lenkrades (18) der Lenksäule (16), um den Fahrer auf eine vorzunehmende Lenkbewegung hinzuweisen,
- Erzeugen einer horizontalen Auslenkung des Lenkrades (18) in eine durch die vorzunehmende Lenkbewegung vorgegebene Richtung,
**dadurch gekennzeichnet, dass**
eine Amplitude der Auslenkung eingestellt wird, indem im Bereich des Fahrers während des bestimmungsgemäßen Betriebs des Fahrzeugs eine Vibration ermittelt wird und die Amplitude in Abhängigkeit von der ermittelten Vibration eingestellt wird.

5. Verfahren nach Anspruch 4, **dadurch gekennzeichnet, dass** die Auslenkung durch einen Impuls oder durch eine vorgegebene Anzahl von Impulsen gebildet wird.

6. Verfahren nach Anspruch 4 oder 5, **dadurch gekennzeichnet, dass** ein zeitlicher Verlauf der Auslenkung in Abhängigkeit von der ermittelten Vibration eingestellt wird.

7. Verfahren nach einem der Ansprüche 4 bis 6, **dadurch gekennzeichnet, dass** ein Geräuschpegel im Bereich des Fahrers ermittelt wird und die Amplitude der Auslenkung in Abhängigkeit von dem ermittelten Geräuschpegel eingestellt wird.

8. Verfahren nach einem der Ansprüche 4 bis 7, **dadurch gekennzeichnet, dass** die Amplitude der Auslenkung begrenzt wird.

## Claims

1. Device (10) for haptic navigation assistance for a driver of a vehicle, having a control unit (12) and an actuator (14) coupled to the control unit (12), wherein the control unit (12) is designed to control the actuator (14), wherein the actuator (14) is mechanically coupled to a steering column (16) of the vehicle and the control unit (12) is designed to generate a deflection of a steering wheel (18) of the steering column (16) by means of an activation of the actuator (14), which deflection may be haptically sensed by the driver to alert the driver to a steering movement to be performed, wherein the actuator (14) is designed to generate a horizontal deflection of the steering wheel (18) in a direction specified by the steering movement to be performed,
**characterised in that**
the control unit (12) is designed to adjust an amplitude of the deflection, to detect a vibration in the region of the driver during normal operation of the vehicle and to adjust the amplitude depending on the detected vibration.

2. Device according to claim 1, **characterised in that** the actuator is arranged in the region of a steering-wheel-side bearing unit (20) of the steering column (16).

3. Vehicle **characterised by** a device according to one of the preceding claims.

4. Method for haptic navigation assistance for a driver of a vehicle, having the following steps:
- providing a device (10) with a control unit (12) and an actuator (14) coupled to the control unit (12),
- controlling the actuator (14) by means of the control unit (12),
- mechanically coupling the actuator (14) to a steering column (16) of the vehicle,
- generating a deflection of a steering wheel (18) of the steering column (16) which may be haptically sensed by the driver to alert the driver to a steering movement to be performed,
- generating a horizontal deflection of the steering wheel (18) in a direction specified by the steering movement to be performed,
**characterised in that**
an amplitude of the deflection is adjusted **in that** a vibration is detected in the region of the driver during normal operation of the vehicle and the amplitude is adjusted depending on the detected vibration.

5. Method according to claim 4, **characterised in that** the deflection is formed by an impulse or by a specified number of impulses.

6. Method according to claim 4 or 5, **characterised in that** a time progression of the deflection is adjusted depending on the detected vibration.

7. Method according to any one of claims 4 to 6, **characterised in that** a noise level in the region of the driver is detected and the amplitude of the deflection is adjusted depending on the detected noise level.

8. Method according to any one of claims 4 to 7, **characterised in that** the amplitude of the deflection is limited.

## Revendications

1. Dispositif (10) destiné à l'aide à la navigation haptique d'un conducteur d'un véhicule, comprenant une unité de commande (12) ainsi qu'un actionneur (14) couplé à l'unité de commande (12), dans lequel l'unité de commande (12) est aménagée pour commander l'actionneur (14), dans lequel l'actionneur (14) est couplé mécaniquement à une colonne de direction (16) du véhicule et l'unité de commande (12) est aménagée pour produire, par activation de l'actionneur (14), un braquage d'un volant de direction (18) de la colonne de direction (16) haptiquement détectable par le conducteur pour indiquer au conducteur un mouvement de braquage à effectuer, dans lequel l'actionneur (14) est aménagé pour produire un braquage horizontal du volant de direction (18) dans une direction prédéfinie par le mouvement de braquage à effectuer,
**caractérisé en ce que**
l'unité de commande (12) est aménagée pour régler une amplitude du braquage, détecter une vibration dans la zone du conducteur au cours du mouvement du véhicule en fonctionnement conforme et régler l'amplitude en fonction de la vibration détectée.

2. Dispositif selon la revendication 1, **caractérisé en ce que** l'actionneur est agencé dans la zone d'une unité de montage (20) côté volant de direction de la colonne de direction (16).

3. Véhicule **caractérisé par** un dispositif selon l'une quelconque des revendications précédentes.

4. Procédé d'aide à la navigation haptique d'un conducteur d'un véhicule comprenant les étapes consistant :
- prévoir un dispositif (10) avec une unité de commande (12) ainsi qu'un actionneur (14) couplé à l'unité de commande (12),
- commander l'actionneur (14) au moyen de l'unité de commande (12),
- coupler mécaniquement l'actionneur (14) à une colonne de direction (16) du véhicule,
- produire un braquage d'un volant de direction (18) de la colonne de direction (16) haptiquement détectable par le conducteur pour indiquer au conducteur un mouvement de braquage à effectuer,
- produire un braquage horizontal du volant de direction (18) dans une direction prédéfinie par le mouvement de braquage à effectuer,
**caractérisé en ce que**
une amplitude du braquage est réglée en détectant une vibration dans la zone du conducteur au cours du mouvement du véhicule en fonctionnement conforme et en réglant l'amplitude en fonction de la vibration détectée.

5. Procédé selon la revendication 4, **caractérisé en ce que** le braquage est formé par une impulsion ou par un nombre prédéfini d'impulsions.

6. Procédé selon la revendication 4 ou 5, **caractérisé en ce qu'**un déroulement dans le temps du braquage est réglé en fonction de la vibration détectée.

7. Procédé selon l'une quelconque des revendications 4 à 6, **caractérisé en ce qu'**un niveau de bruit est détecté dans la zone du conducteur et l'amplitude du braquage est réglée en fonction du niveau de bruit détecté.

8. Procédé selon l'une quelconque des revendications 4 à 7, **caractérisé en ce que** l'amplitude du braquage est limitée.
